# EUROPEAN PATENT APPLICATION

(11) **EP 2 784 433 A1**
(43) Date of publication of application: **01.10.2014**
(21) Application number: 13275079.5
(22) Date of filing: 26.03.2013
(51) Int. Cl.: F41F 3/04, B64D 7/08, F41F 3/06

(54) **A launch assembly for launching weapons from an air vehicle**

(71) Applicant: MBDA UK Limited, Stevenage, Hertfordshire SG1 2DA (GB)
(72) Inventor: The designation of the inventor has not yet been filed
(74) Representative: BAE SYSTEMS plc Group IP Department

(57) **Abstract**

A launch assembly for launching a weapon 3 from an air vehicle, the launch assembly comprising a rail 1, and a weapon 3, such as a missile, configurable to be moved along the rail 1 from: a stowed position in which the weapon 3 is stowed and is facing a first direction, to a release position in which the weapon 3 is about to be released and is facing a second direction. The rail 1 is curved such that the second direction is different to the first direction. For example the pitch of the weapon may change.

## Description

### FIELD OF THE INVENTION

The present invention relates to launch assemblies, and particularly to launch assemblies for launching weapons from an airborne launch platform.

### BACKGROUND ART

Rail launch assemblies for air vehicles typically comprise a weapon (e.g. a missile, bomb or other store) mounted on hangers and moveable along a rail beneath an aircraft wing. In such systems, the weapon is retained on the rail in a stowed configuration, but is moveable along the rail during launch, to a release position in which the missile is about to leave the rail.

The rail tends to be fixedly mounted on the air vehicle and is typically straight and rigid. In many assemblies, the rail extends parallel to the longitudinal axis of the air vehicle. The weapon tends to be restricted to a release position in which the missile the same direction as it is stowed (typically substantially facing the direction of flight of the launch platform). This may impact the performance of the weapon, especially in combat situations in which the target is located in a significantly different direction to that of the air vehicle launching the weapon.

Another problem suffered by known launch assemblies is that the weapon can sometimes move towards, or even hit, the launch platform immediately after release. This can have various causes, such as tip-off (pitch rotation of a missile during the final phase of launch from the rail), or the flowfield around neighbouring parts of the air vehicle, such as the engines, or other stores, influencing the flight path of the weapon.

### DISCLOSURE OF THE INVENTION

The present invention seeks to reduce or mitigate at least some of the above-mentioned drawbacks.

According to a first aspect of the invention there is provided a launch assembly for launching a weapon from an air vehicle , the launch assembly comprising a rail, and a weapon configurable to be moved along the rail from: a stowed position in which the weapon is stowed and is facing a first direction, to a release position in which the weapon is about to be released and is facing a second direction, **characterised in that** the rail is curved such that the second direction is different to the first direction. By providing a curved rail, the direction the weapon is facing on release (i.e. the second direction) is altered by virtue of the weapon having moved along the curved rail. The launch assembly therefore enables the weapon to be launched in a different direction to the direction that the weapon is facing in its stowed position. This may enable the weapon's performance to be improved.

The weapon may be a bomb, or other store, but is more preferably a missile.

The weapon is configured to move along the rail. The weapon preferably moves along a curved path. The weapon may be substantially aligned with a tangent to the local curve of the rail at each location of the weapon along the rail.

The longitudinal direction of the rail may be parallel to the longitudinal axis of an air vehicle on which the assembly is to be used. The rail may be generally forward facing. In the stowed configuration, the weapon may be forward facing.

It tends to be desirable to be able to select the direction of release depending on the circumstances in which the weapon is being used. The second direction is dependent on the curvature of the rail, and on the length of the rail along which the weapon has travelled. The rail may be extendable. Such an arrangement provides the versatility of having a long rail without the constant drag penalty. The rail may be configurable between a retracted configuration and an extended configuration. The rail may be curved in at least the extended configuration. The rail may also be curved in the retracted configuration. The launch assembly may be arranged such that the second direction varies in dependence on the magnitude of the extension of the rail.

The rail may be telescopically extendable. The radius of curvature of the rail may be substantially identical in the extended and in the retracted configurations; such an arrangement be especially beneficial for embodiments in which the rail is telescopically extendable.

It is particularly desirable to be able to direct release of the weapon in an upward and/or a downward direction. The curved rail may extend, or be extendable, forwardly of the weapon (relative to the weapon in the stowed position). The curved rail may extend, or be extendable, rearwardly of the weapon (relative to the weapon in the stowed position). The curved rail preferably extends, or is extendable, both forwardly and rearwardly of the weapon (relative to the weapon in the stowed position).

The launch assembly may be arranged such that the pitch attitude of the weapon in the release position, is different to the pitch attitude of the weapon in the stowed position. The rail preferably curves in a substantially vertical plane (that orientation being considered when the launch assembly is installed on an air vehicle). The assembly may comprise a launch platform with which the rail is associated (for example from which the rail is suspended). When the weapon is in the release position, the separation between the weapon and the launch platform may have increased (relative to the separation when the weapon is in the stowed position).

In the release position, the weapon is about to be released. In the release position, the weapon may be about to leave an end of the rail. For example, a first hanger of the weapon may be at a distal end of the rail such that further movement along the rail will result in the weapon leaving the rail.

In some circumstances it may be desirable for the lateral position of the weapon to be different in the stowed and the release position. In the first aspect of the invention, the curved rail may be rotatable to swing inboard and/or outboard such that the lateral position of the weapon in the release position is different to the lateral position of the weapon in the stowed position. When the weapon is in the stowed position, the rail may be contained in a substantially vertical plane. The rail may be rotatable to swing inboard and/or outboard such that, when so rotated, the rail is contained in a plane at an angle to the vertical. The rail is preferably rotated to be in the plane at an angle to the vertical, when the weapon is in the release position. By altering the lateral position of the weapon, the weapon may be released at a location that reduces the chances of the weapon moving towards its launch platform. For example, it may be positioned to reduce the influence of a nearby flowfield on the weapon when launched, or it may simply be released further from the launch platform to provide greater room for error in the weapon trajectory. The rail may be rotatable about an axis that is substantially parallel to the longitudinal axis of the air vehicle. The axis may be tangential to the curve of the rail. It will be appreciated that, where appropriate, the orientations/directions considered above refer to when the launch assembly is installed on an air vehicle. Such orientations/directions are, however, still apparent to the skilled person when considering the launch assembly in isolation.

According to another aspect of the invention, there is provided a method of launching a weapon from an airborne platform, the method comprising the steps of:
moving the weapon along a rail from a stowed position in which the weapon is stowed, to a release position in which the weapon is about to be released,
the rail being curved such that the weapon in the release position faces a different direction to the weapon in the stowed position. In embodiments in which the rail is extendable, the method may comprise the step of extending the rail from a retracted configuration to an extended configuration. The method preferably comprises such a step prior to the weapon moving to the release position.

According to a third aspect of the invention, there is provided a launch assembly according to CLAIM 10. By altering the lateral position of the weapon, the weapon may be released at a location that reduces the chances of the weapon moving towards its launch platform. For example, it may be positioned to reduce the influence of a nearby flowfield on the weapon when launched, or it may simply be released further from the launch platform to provide greater room for error in the weapon trajectory.

In the stowed position the weapon may face a first direction and in the release position the weapon may face a second direction. The rail may be curved such that the second direction is different to the first direction.

According to another aspect of the invention, there is provided an air vehicle comprising the launcher according to the above-mentioned aspects of the invention. The air vehicle may be manned (for example a piloted aircraft). The air vehicle may be unmanned (i.e. a UAV).

It will be appreciated that any features described with reference to one aspect of the invention are equally applicable to any other aspect of the invention, and vice versa. For example features described with reference to the first aspect may also be applicable to the third aspect.

### BRIEF DESCRIPTION OF THE DRAWINGS

Example embodiments of the invention will now be described by way of example only and with reference to the accompanying drawings, of which:
Figure 1 is a schematic side view of a launch assembly according to a first embodiment of the invention showing the missile in a stowed position;
Figure 2 is the launch assembly of Figure 1 showing the rail in a rearwardly extended configuration;
Figure 3 is the launch assembly in Figure 2 showing the missile in a release position;
Figure 4 is the launch assembly of Figure 1 showing the rail in a forwardly extended configuration;
Figure 5 is the launch assembly in Figure 4 showing the missile in a release position; and
Figure 6 is a schematic front view of a launch assembly according to a second embodiment of the invention, showing the rail swung outwardly.

### DETAILED DESCRIPTION

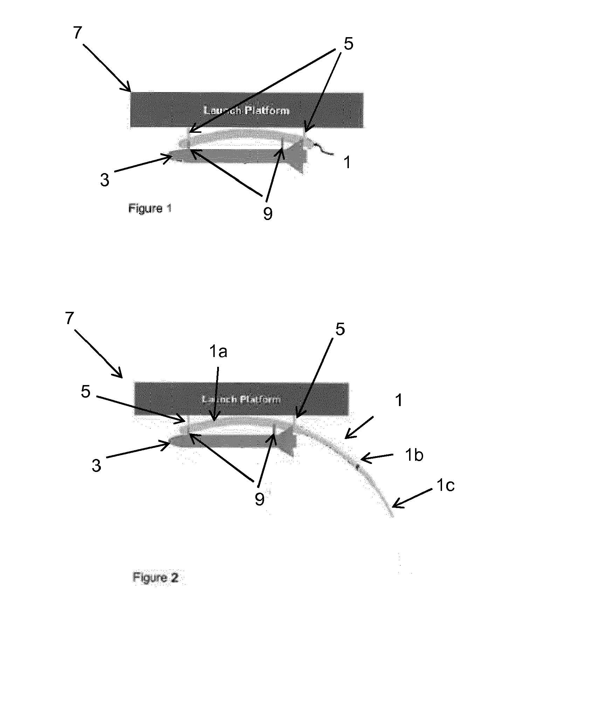

Referring to Figure 1, a launch assembly according to a first embodiment of the invention comprises a rail 1 and missile 3 configured to be moved along the rail 1. The rail is attached to supports 5 extending vertically from the underside of a launch platform (in the form of a wing 7 of an aircraft (not shown)). The missile 3 is shown in a stowed position in which it is secured to the rail in a conventional manner via hangers 9. As is also conventional, the missile 3, when stowed, faces forward and is thus aligned with the direction of flight of the aircraft.

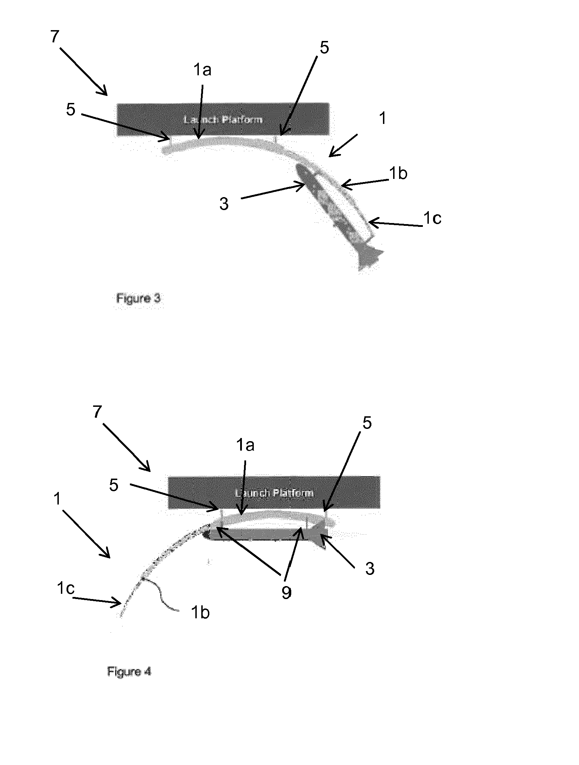

According to the first embodiment of the invention, the rail 1 of the launch assembly is curved. Furthermore, the curved rail 1 comprises three curved sub-sections 1a-1c in a telescopic relationship, such that the curved rail 1 is extendable, between a retracted configuration (shown in Figure 1) and a rearwardly extended configuration (shown in Figures 2 and 3).

When the missile 3 is to be launched against a target above the aircraft, the rail 1 is extended rearwardly into the extended configuration of Figure 2. The means securing the missile in the stowed position are then released to enable the missile 3 to freely move along the rail 1. In the first embodiment of the invention, movement of the missile is effected by unlocking the weapon from the launch platform and deploying a control surface (not shown) to increase the aerodynamic drag on the missile thereby moving it rearwardly to the position shown in Figure 3. In alternative embodiments (not shown), the missile may be moved rearwardly by other means, such as deploying a parachute or streamer.

Referring now to Figure 3, the missile 3 is moved to a release position, in which it is about to leave the end of the rail 1. By virtue of the curvature of the rail, the missile in the release position is now facing in a different direction to the missile in the stowed position (the pitch of the missile has increased (shown exaggerated in Figure 3 for clarity)). Such an arrangement improves the performance of the missile because it is already facing in approximately the direction required to hit the target, and does not need to effect such a sharp change in direction as would be required had the missile be released facing forward. Furthermore, the separation between the missile and the launch platform (i.e. the wing) has been increased, making it less likely the missile accidentally contacts the launch platform after release.

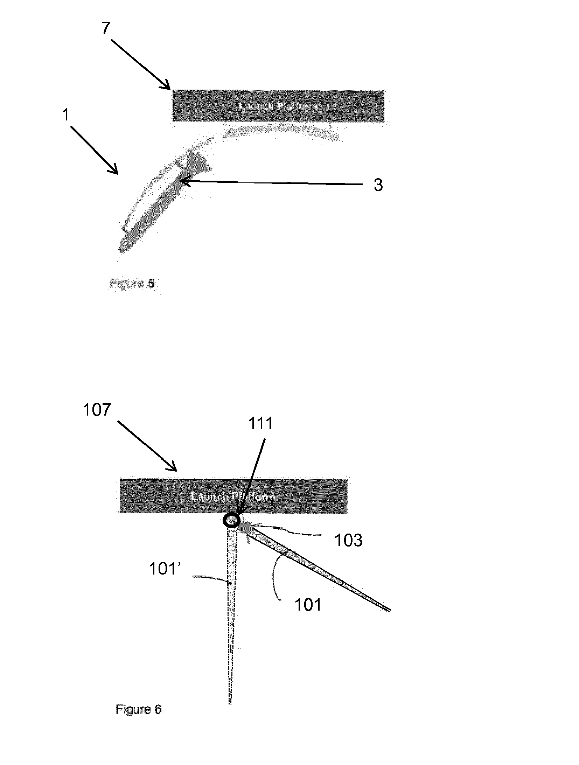

Figures 2 and 3 show the launch assembly when the missile 3 is to be launched against a target behind the aircraft, whereas Figures 4 and 5 show the launch assembly when the missile 3 is to be launched against a target ahead the aircraft. In this situation, the rail 1 is extended forwardly via the extension of rail sub-sections 1b and 1c (Figure 4). To launch the missile 3, the means securing the missile in the stowed position are released to enable it to freely move along the rail 1. The missile 3 is then moved forward along the curved rail 1 to the position shown in Figure 5 by a mechanical pusher (not shown). In alternative embodiments (not shown), the missile may be moved forwardly by other means, such as under gravity, or by a propulsion system.

In Figure 5 the missile 3 is in a release position, in which it is about to leave the rail 1. By virtue of the curvature of the rail, the missile in the release position is now facing in a different direction to the missile in the stowed position (the pitch of the missile has decreased (shown exaggerated in Figure 5). Such an arrangement improves the performance of the missile because it is already facing in approximately the direction required to hit the target, and does not need to effect such a sharp change in direction as would be required had the missile be released facing forward. Furthermore, the separation between the missile and the launch platform (i.e. the aircraft wing) has been increased, making it less likely the missile accidentally contacts the aircraft after release.

Figure 6 shows a second embodiment of the invention. Features in the second embodiment of the invention that correspond to similar features in the first embodiment of the invention, are shown with the same reference numerals as in the first embodiment, but with the addition of the prefix '1' (or '10' where appropriate). The second embodiment is substantially identical to the first embodiment except that the rail 101 is also rotatable to swing inboard and/or outboard such that the lateral position of the missile 103 in the release position is different to the lateral position of the missile 103 in the stowed position.

Figure 6 is a front view of the launch assembly. The rail 101 is shown in its extended configuration, but with the missile 103 in a stowed position. The rail 101' in an unrotated position (in which the rail is in a vertical plane) is shown in dashed lines. The rail 101 in an outwardly rotated position is shown in full thickness lines. By rotating the rail to swing outwardly (about an axis 111 parallel to the longitudinal axis (not shown) of the aircraft), the lateral position (i.e. left-right in Figure 6) of the missile 103 can be altered prior to launch. Such an arrangement is especially beneficial in reducing the risk of the missile contacting the aircraft after its release, because the missile can be laterally moved to reduce the impact of undesirable flowfields caused by other components of the aircraft (such as an engine or additional stores).

Whilst the present invention has been described and illustrated with reference to particular embodiments, it will be appreciated by those of ordinary skill in the art that the invention lends itself to many different variations not specifically illustrated herein. For example, in an alternative embodiment of the invention (not shown), the rail is straight and of fixed length, but is rotatable to swing inboard and/or outboard such that the lateral position of the weapon in the release position is different to the lateral position of the weapon in the stowed position. Such an arrangement improves the safety of the launch system by enabling the missile to be laterally moved to reduce the chances of it hitting the aircraft after release.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims.

## Claims

1. A launch assembly for launching a weapon from an air vehicle , the launch assembly comprising a rail, and a weapon configurable to be moved along the rail from:
a stowed position in which the weapon is stowed and is facing a first direction, to
a release position in which the weapon is about to be released and is facing a second direction,
**characterised in that** the rail is curved such that the second direction is different to the first direction.

2. A launch assembly according to claim 1, wherein the rail is extendable, and is configurable between a retracted configuration and an extended configuration, the rail being curved in at least the extended configuration.

3. A launch assembly according to claim 2, wherein the rail is also curved in the retracted configuration.

4. A launch assembly according to claim 2 or claim 3, wherein the rail is telescopically extendable.

5. A launch assembly according to any of claim 2 to 4, wherein the curved rail is extendable forwardly of the weapon, relative to the weapon in the stowed position.

6. A launch assembly according to any of claims 2 to 5, wherein the curved rail is extendable rearwardly of the weapon, relative to the weapon in the stowed position.

7. A launch assembly according to any preceding claim, wherein the curved rail is rotatable to swing inboard and/or outboard such that the lateral position of the weapon in the release position is different to the lateral position of the weapon in the stowed position

8. A method of launching a weapon from an air vehicle, the method comprising the steps of:
moving the weapon along a rail from a stowed position in which the weapon is stowed, to a release position in which the weapon is about to be released,
the rail being curved such that the weapon in the release position faces a different direction to the weapon in the stowed position.

9. A method according to claim 8, wherein the rail is extendable, and the method comprises the step of extending the rail from a retracted configuration to an extended configuration.

10. A launch assembly for launching a weapon from an air vehicle, the launch assembly comprising a rail and a weapon configurable to be moved along the rail from
a stowed position in which the weapon is stowed; and
a release position in which the weapon is about to be released,
wherein the rail is rotatable to swing inboard and/or outboard such that the lateral position of the weapon in the release position is different to the lateral position of the weapon in the stowed position.

11. A launch assembly according to claim 10, wherein in the stowed position the weapon is facing a first direction and in the release position the weapon is facing a second direction,
and the rail is curved such that the second direction is different to the first direction.

12. A launch assembly as herein described with reference to the Figures.
